# EUROPEAN PATENT SPECIFICATION

(11) **EP 1 721 521 B1**
(45) Date of publication and mention of the grant of the patent: **20.08.2008**
(21) Application number: 06008765.7
(22) Date of filing: 27.04.2006
(51) Int. Cl.: A01K 97/02

(54) **A bait device for use in angling**
Ködervorrichtung zum Angeln
Système d'appat pour la pêche

(30) Priority: 11.05.2005 GB 0509575
(43) Date of publication of application: 15.11.2006
(73) Proprietor: FOX INTERNATIONAL GROUP LIMITED, Hainault, Essex IG6 3UT (GB)
(72) Inventor: Tasker, Stephen, Ongar Essex CM5 OTP (GB); Cottis, Maxwell Stewart, Braintree Essex CM7 9FD (GB)
(74) Representative: Crouch, David John

(56) References cited:
- GB-A- 2 205 471
- GB-A- 2 208 782
- GB-A- 2 351 642
- GB-A- 2 418 338
- US-B1- 6 711 849
- PATENT ABSTRACTS OF JAPAN vol. 2000, no. 06, 22 September 2000 (2000-09-22) & JP 2000 083544 A (MORISHITA EISAKU), 28 March 2000 (2000-03-28)

## Description

The present invention relates to a bait device for use in angling comprising an enclosure defined by a wall in which are formed a plurality of apertures for bait to pass from the enclosure into the swim when in use.

An example of such a bait device is disclosed in GB-2351642A. This describes a bait device having outer and inner cylindrical parts, each with apertures generally in registration with one another such that relative rotation between the parts results in a change in the effective size of the apertures, and indeed in one relative positioning the apertures are completely closed.

Other examples of such a bait device are disclosed in GB-A-2205471 and in JP-A-2000083544 which also have outer and inner cylindrical parts, each with one or more apertures generally in registration with one another such that relative longitudinal movement between the parts selectively closes or opens the aperture or apertures.

A disadvantage of two of these devices is that the effective size of any one of the apertures is the same as the others in any given relative positioning of the cylindrical parts. Furthermore, the construction is relatively expensive, and is not appropriate for a baiting device of a construction enabling an area of water to be fished to be baited by successive castings. Such a device may have a nose portion which is streamlined for flight through the air and which acts as a float when the device is on the water, so that the device then aligns itself nose uppermost to discharge bait from its open rear end and/or through its apertures.

The present invention seeks to provide a remedy for at least one of these drawbacks.

Accordingly, the present invention is directed to a bait device for use in angling comprising an enclosure defined by a wall in which are formed a plurality of apertures for bait to pass from the enclosure into the swim when in use, and a part which is engageable with the interior of the wall and can be moved relative to the wall into and out of a position in which all or a number of the said plurality of apertures are closed by that part, to selectively close or open those apertures, wherein the two parts are provided with interengaging formations so that, once the said part is in position relative to the wall, the two parts may be restrained from further relative movement, in which these interengaging formations comprise at least one outwardly projecting protuberance which is on the said part, and which is the same size as each of the said plurality of apertures and which fits in any selected one of the said plurality of apertures in the wall, so that the aperture itself is the formation provided in the wall.

By such means relative movement between the wall and the said part is restrained.

Preferably, the said part is slidable within the said wall.

The said part can be moved into and out of the said position by insertion and removal respectively of the said part into and from the said enclosure.

All of the apertures may be closed when the said part is in the said position, and all of them may be open when the said part is removed.

There may be provided a plurality of different such parts, each of which can be moved into and out of such a position, the differences in those parts being such that the number of apertures closed depends upon which selected part is moved into that position.

In some example embodiments the said part can be slid within the enclosure between different positions therewithin.

The said part may close a respective different number of apertures in the said different positions.

This enables the bait device to be adapted to all sorts of different baits, including pellets, bird seed, hemp, maggots, casters and sweetcorn.

The apertures enable such bait as hemp to be kept wet as well as facilitating its dispersal in the water. Preferably, the said wall and the said part are cylindrical. This facilitates relative slidable movement.

Advantageously, the said wall and the said part are movable relative to one another in a direction along the cylindrical axis.

The said part may be telescopically adjustable in length by having two parts with respective interengaging coarse screw threads.

The said wall may have at least two apertures formed in it which are spaced apart in a direction along the said axis. This enables longitudinal movement of the slidable part relative to the wall to selectively open and close at least one of those apertures.

A suitable hydrodynamically effective shape for the or each aperture is a streamlined oval teardrop shape.

The bait device may have an intended forward end provided with a streamlined nose portion. The latter may be generally hemispherical. It may be hollow to act as a float when the bait device is in use.

The nose may be constructed so that it is readily attachable to and releasable from the said wall, for example by interengaging rcrewthreads. This enables a set of interchangeable noses to be provided having respective different colours. This facilitates for example a more readily visible black nose to be used in bright daylight conditions, whilst at dusk or otherwise darker conditions, a fluorescent yellow or orange coloured nose can be used instead to improve visibility of the bait device. It also allows for differences between one person and another as to what is the most visible colour.

Examples of a bait device made in accordance with the present invention will now be described with reference to the accompanying drawings in which:
- Figure 1: is an exploded perspective view of a bait device made in accordance with the present invention;
- Figure 2: shows a perspective view from another direction of a nose part of the bait device shown in Figure 1;
- Figure 3: shows a perspective view on a smaller scale of an inner cylindrical sleeve part of the bait device shown in Figure 1;
- Figure 4: shows a perspective view of an alternative construction for the sleeve shown in Figure 3;
- Figure 5: shows a side view of the bait device shown in Figure 1 in an assembled state;
- Figure 6: shows an axial sectional view of the bait device shown in Figure 5;
- Figure 7: shows a transverse sectional view of the bait device shown in Figure 5;
- Figure 8: shows the bait device of Figure 5 with a different relative positioning of parts thereof;
- Figure 9: shows a perspective view of the bait device shown in Figure 5 with strings attached;
- Figure 10: is a see-through side view of the bait device shown in Figure 5;
- Figure 11: shows a perspective view of a modified construction for the sleeve shown in Figure 3;
- Figure 12: shows a perspective view of a further modified construction for the sleeve shown in Figure 3; and
- Figure 13: shows a perspective view of the bait device provided with the modification of inner sleeve shown in Figure 11 or that shown in Figure 12.

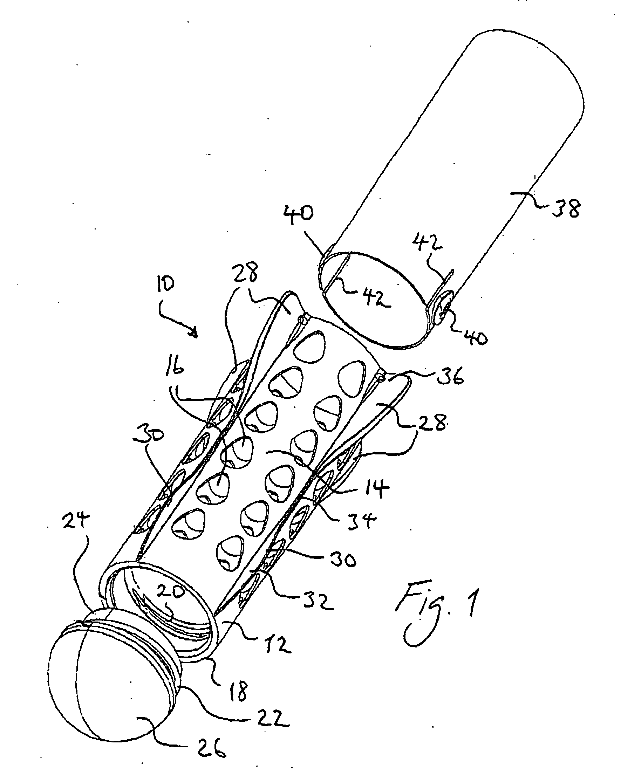

The bait device 10 shown in Figures 1 to 10 comprises main body 12 in the form of a hollow cylindrical wall 14 of circular section and made of a synthetic plastics material and formed with a plurality of oval tear-shaped apertures 16 each with their broader ends closer to an intended forward end 18 of the wall 14. The apertures 16 are all the same size as one another. At its forward end 18, the wall 14 has an internal screw thread 20 engaged by an external screw thread 22 around a short cylindrical formation 24 on the rear side and integral with a generally hemispherical injection moulded nose part 26, also made of a synthetic plastics material. The rear end of the cylindrical wall 14 is open.

Projecting outwardly from the exterior of the cylindrical wall 14 are four fins 28 extending longitudinally of and made integrally with the cylindrical wall 14, parallel with the axis thereof. The fins are identical to one another and are spaced apart equiangularly around the outside of the wall 14. Each has a curved outer edge 30 such that, in progressing from the front end of the cylindrical wall 14 to the rear end thereof, it has a widened portion 32, then a narrowed portion 34, and finally a widened portion 36 which is wider than the first widened portion 32, the transition from one portion to another being gradual at every position along the length of the fin. This facilitates the flight of the device 10 through the air upon casting.

The nose part 26 is hollow to enable it to act as a float, once the device 10 is in the water.

The bait device 10 is further provided with an inner sleeve 38 which is also cylindrical and which is also made of a synthetic plastics material. It has an outer diameter substantially equal to the inner diameter of the cylindrical wall 14 so that it forms a sliding/close fit therewith. It has two integrally formed protuberances 40 which are substantially the same size as one another and with each of the apertures 16, so that each protuberance 40 can snap fit into any selected aperture 16. The protuberances are on opposite sides of the sleeve 38 at the front end thereof. Two pairs of slots 42 are provided in the sleeve 38 opening at the forward end thereof, with a protuberance 40 located between each pair, to facilitate the snap fitting.

The apertures 16 are located in columns and rows, with two columns extending longitudinally of the wall 14 between each pair of adjacent fins 28, and with eight apertures 16 in each row spaced apart equiangularly around the sleeve 14, so that in the illustrated example embodiment there are forty-eight apertures altogether.

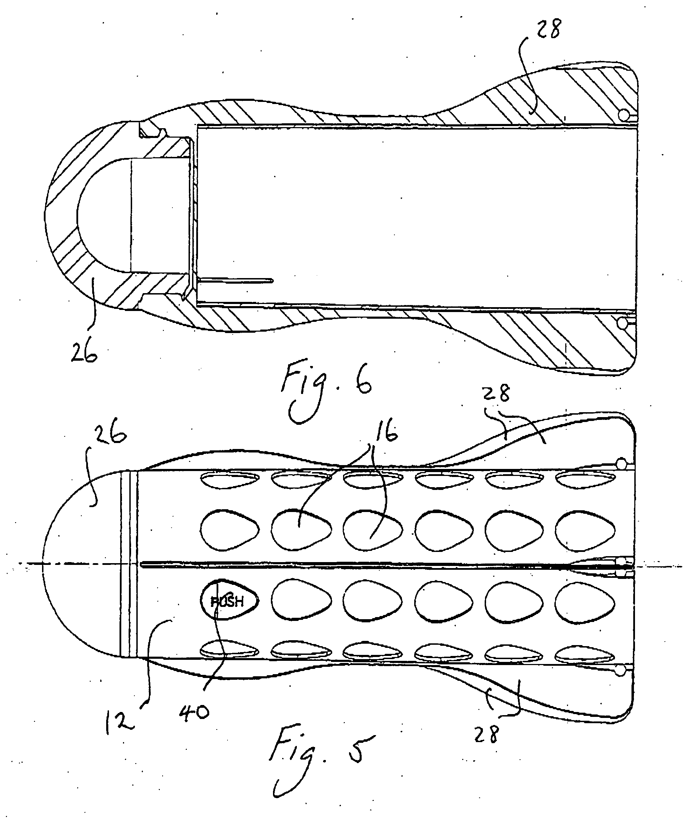

In Figure 5, the protuberances 40 are both located in apertures 16 which are of the forwardmost row, closest to the nose part 26, so that all the apertures 16 are closed by the sleeve 38. This may be suitable for bait within the enclosure defined by the wall 14 and the sleeve 38 which descends from the bait device 10, exiting the rear end thereof, whilst the latter is inverted in the water with its nose part 26 uppermost, acting as a float.

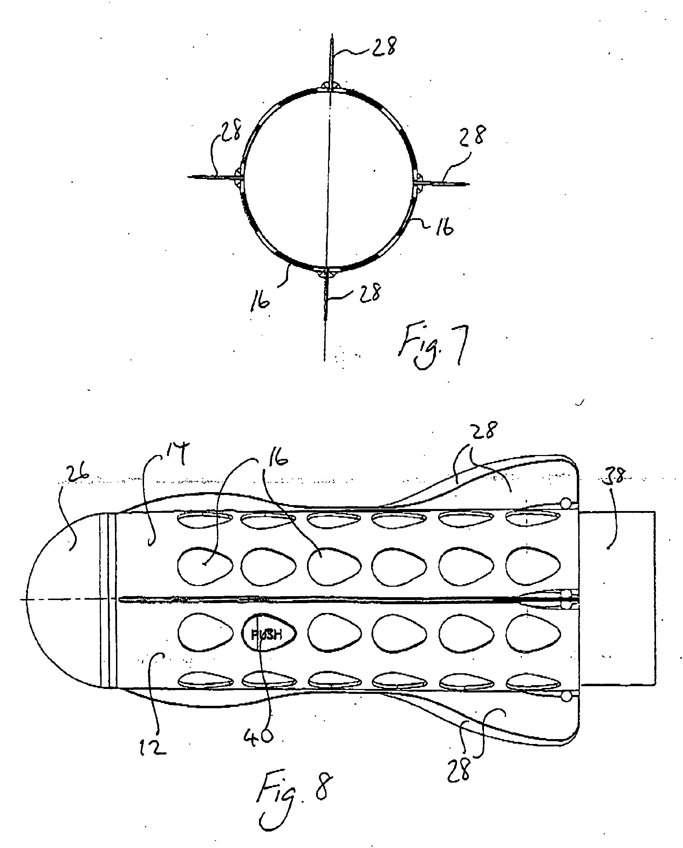

In Figure 8, the protuberances 40 are both located in apertures 16, which are in the second row from the front. As a result, the forwardmost row of apertures 16 are open, whilst all the others are closed, and some bait is now free to pass from the enclosure or interior of the bait device 10 into the swim via the forwardmost row of apertures 16, suitable for kinds of bait which do not readily fall through water in the swim, but rather float out through the apertures 16.

It will be noted that the rear end of the sleeve 38 projects rearwardly from the rear end of the cylindrical wall 14 when it is located relative thereto in the position shown in Figure 8, effectively increasing the capacity of the enclosure.

It will be appreciated that the sleeve 38 can readily be shifted, by pressing the protuberances 40 inwardly, and sliding the sleeve 38 along the wall 14 until the protuberances snap into apertures 16 in the desired row, so that any selected number of rows of apertures 16 can be opened, from one only up to seven, the sleeve 30 projecting further from the wall 14 the more rows of apertures 16 are opened.

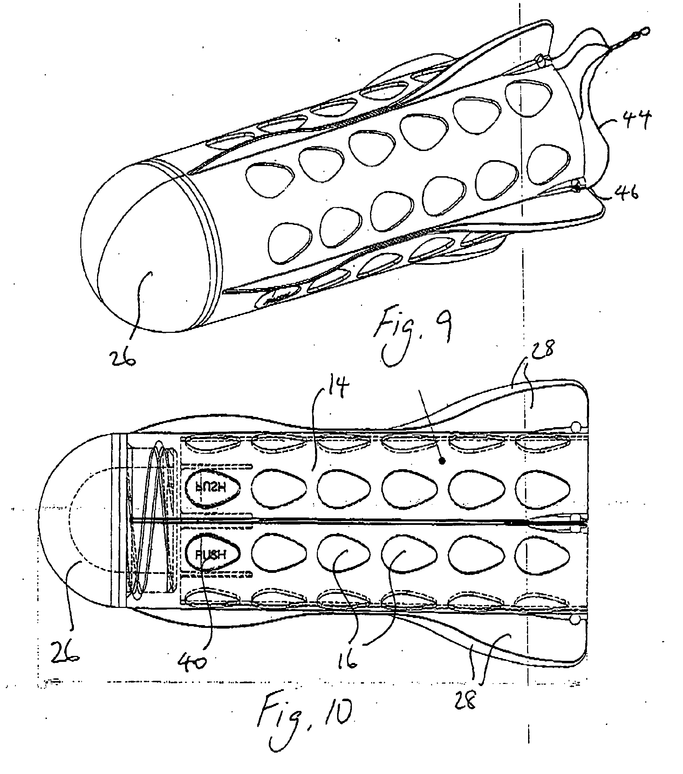

Figure 9 shows how four strings 44 can be attached to the rear end of the wall 14, through attachment holes 46 at the base of each fin 28, the strings being held together at their ends further from the wall' 14 by a sleeve portion 48, the strings terminating at a ring 50 for attachment to a fishing rod line (not shown).

After the bait has been discharged from the device 10, the latter may be retrieved by way of the line and the strings 44. The apertures 16 now facilitate dragging of the device 10 through the water. The device 10 can be used several times in this way to bait a large area of water, whereupon a hook line with a rig can be cast into that area, usually with a different rod (not shown) from the one used to cast the bait device.

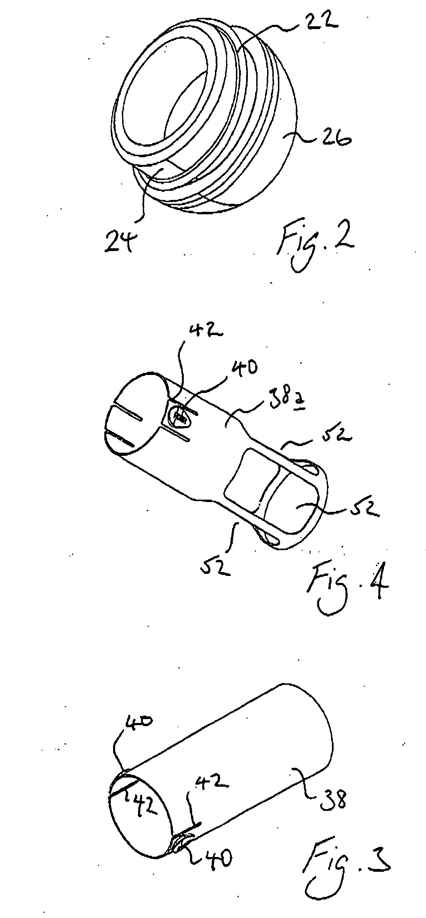

The sleeve 38 shown in Figure 3 has no apertures. However, an alternative construction of sleeve 38a shown in Figure 4 has rectangular apertures 52 in a rear half thereof, so that only half the apertures 16 are closed by the sleeve 38a when the protuberances 40 thereof are located in any one of the first to the fifth rows of apertures 16. For example, when the protuberances of the construction shown in Figure 4 are located in the second row of aperture 16 of the wall 14, apertures 16 in the first, sixth, seventh and eighth rows are open.

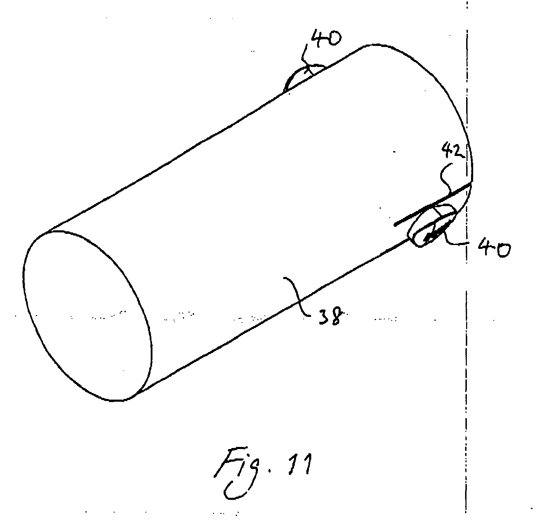

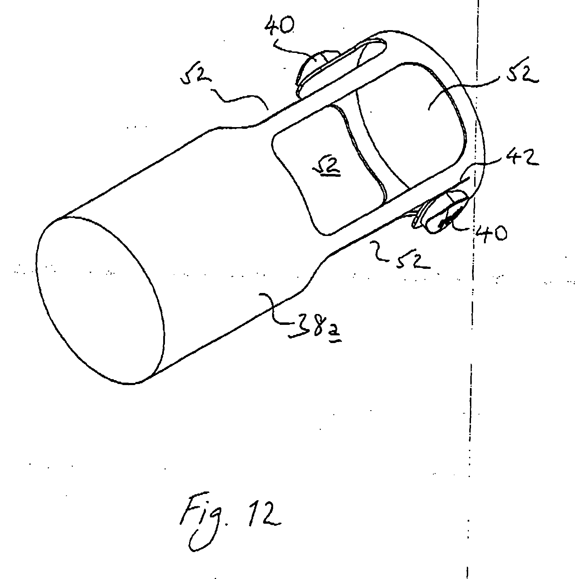

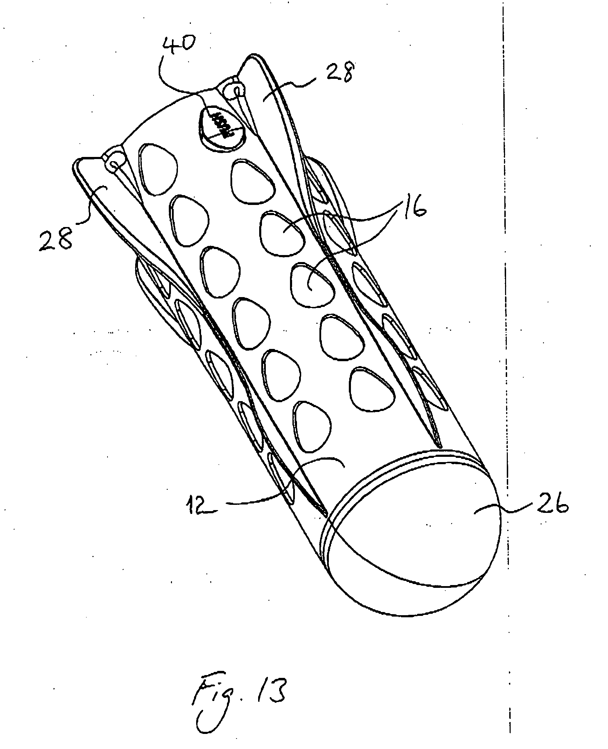

In the modified constructions for the inner sleeve shown in Figures 11 and 12, each has its protuberances 40 at the rear of its ends, so that the inner sleeve 38 or 38a is either fully inserted into the main body 12, so the assembly is as shown in Figure 13, or is fully removed therefrom. When inserted, the inner sleeve 38 shown in Figure 11 closes all the apertures in main body 12. Because of rectangular apertures 52 in and towards the rear of the inner sleeve 38a shown in Figure 12, when the latter is inserted in the main body 12, it closes the apertures in the front half of the main body 12, but not the rear half.

Both inner sleeves 38 and 38a shown in Figures 11 and 12 may be made available for selective use with a single main body 12, to enable a different number of apertures, or a different selection of apertures, in the main body to be closed selectively. The selection available may be increased by providing yet further inner sleeves (not shown) with differently sized apertures 52. Whilst a number of different inner sleeves are thus required to enable such a selection to be made, the inner sleeves can be made relatively inexpensively and whichever selection is made, once the selected sleeve is located in the main body 12, none of it! projects rearwardly from the main body 12, as it does with certain selections of position of the inner sleeve relative to the main body 12 in the construction shown in Figure 8 for example.

Numerous variations and modifications to the illustrated bait device may occur to the reader without taking the resulting construction outside the scope of the present invention. For example, there may be a different number and/or different arrangement of apertures 16, as long as there are at least two apertures 16. There may be a different number of fins 28, and whilst it is preferable for the wall 14 to be elongate and hollow, this is not essential. The cross-lection of the cylindrical wall 14 and the sleeve 14 do not need to be circular, and may for example be octagonal instead.

## Claims

1. A bait device (10) for use in angling comprising an enclosure defined by a wall (14) in which are formed a plurality of apertures (16) for bait to pass from the enclosure into the swim when in use, and a part (38 or 38a) which is engageable with the interior of the wall (14) and can be moved relative to the wall (14) into and out of a position in which all or a number of the said plurality of apertures (16) are closed by that part (38 or 38a), to selectively close or open those apertures (16), wherein the wall (14) and the said part (38 or 38a) are provided with interengaging formations (16, 40) so that, once the said part (38 or 38a) is in position relative to the wall (14), the two parts (14 and 38 or 38a) are restrained from further relative movement, and wherein the said interengaging formations comprise at least one outwardly projecting protuberance (40) which is on the said part (38 or 38a) **characterized in that** the said at least one outwardly projecting protuberance (40) is the same size as each of the said plurality of apertures and fits in any selected one of the said plurality of apertures (16) in the wall (14), so that the aperture (16) itself is the formation provided in the wall (14).

2. A bait device according to claim 1, **characterized in that** the said part (38 or 38a) is slidable within the said wall (14).

3. A bait device according to claim 1 or claim 2, **characterized in that** said part (38 or 38a) can be moved into and out of the said position by insertion and removal respectively of the said part (38 or 38a) into and from the said enclosure.

4. A bait device according to any preceding claim, **characterized in that** all of the said apertures are closed when the said part (38 or 38a) is in the said position, and all of the said apertures are open when the said part (38 or 38a) is removed.

5. A bait device according to claim 4, **characterized in that** there are a plurality of different such parts (38 or 38a), each of which can be moved into and out of such a position, the differences in those parts (38 or 38a) being such that the number of apertures (16) closed depends upon which selected part (38 or 38a) is moved into that position.

6. A bait device according to any one of claims 1 to 3, **characterized in that** the said part (38 or 38a) can be slid within the enclosure between different positions therewithin.

7. A bait device according to claim 6, **characterized in that** the said part (38 or 38a) closes a respective different number of apertures (16) in the said different positions.

8. A bait device according to any preceding claim, **characterized in that** the said wall (14) and the said part (38 or 38a) are cylindrical.

9. A bait device according to any preceding claim, **characterized in that** the said wall (14) and the said part (38 or 38a) are movable relative to one another in a direction along the cylindrical axis.

10. A bait device according to any preceding claim, **characterized in that** the said part (38 or 38a) is telescopically adjustable in length by having two parts with respective interengaging coarse screw threads.

11. A bait device according to any preceding claim, **characterized in that** the said wall (14) has at least two apertures (16) formed in it which are spaced apart in a direction along the said axis.

12. A bait device according to any preceding claim, **characterized in that** the or each aperture (16) is a streamlined oval teardrop shape.

13. A bait device according to claim 12, **characterized in that** the or each protuberance (40) has a streamlined oval teardrop shape.

14. A bait device according to any preceding claim, **characterized in that** it has an intended forward end provided with a streamlined nose portion (26).

15. A bait device according to claim 14, **characterized in that** the nose portion (26) is generally hemispherical.

16. A bait device according to any preceding claim, **characterized in that** it has an intended forward end provided with a nose portion (26) which is hollow.

17. A bait device according to any preceding claim, **characterized in that** it has an intended forward end provided with a nose portion (26) constructed so that it is readily attachable to and releasable from the said wall (14).

18. A bait device according to claim 17, **characterized in that** the nose portion (26) and the wall (14) have interengaging screwthreads.

19. A bait device according to claim 18, **characterized in that** a set of interchangeable noses are provided having respective different colours.

## Patentansprüche

1. Ködervorrichtung (10) für die Verwendung beim Angeln, mit einem Gehäuse, das durch eine Wand (14) definiert ist, in der mehrere Öffnungen (16) ausgebildet sind, durch die sich im Gebrauch Köder aus dem Gehäuse in die fischreiche Stelle bewegen kann, und einem Teil (38 oder 38a), das mit der Innenseite der Wand (14) in Eingriff gelangen kann und relativ zu der Wand (14) in eine und aus einer Position bewegt werden kann, in der alle oder mehrere der Öffnungen (16) durch das Teil (38 oder 38a) verschlossen sind, um jene Öffnungen (16) wahlweise zu verschließen oder zu öffnen, wobei die Wand (14) und das Teil (38 oder 38a) mit Formationen (16, 40) versehen sind, die in gegenseitigen Eingriff gelangen können, so dass dann, wenn das Teil (38 oder 38a) in einer Position in Bezug auf die Wand (14) ist, die beiden Teile (14 und 38 oder 38a) von einer weiteren relativen Bewegung abgehalten werden, und wobei die miteinander in Eingriff befindlichen Formationen wenigstens einen nach außen vorstehenden Vorsprung (40) umfassen, der an dem Teil (38 oder 38a) vorhanden ist, **dadurch gekennzeichnet, dass** der wenigstens eine nach außen stehende Vorsprung (40) die gleiche Größe wie jede der mehreren Öffnungen hat und in irgendeine Ausgewählte der mehreren Öffnungen (16) in der Wand (14) passt, so dass die Öffnung (16) selbst die in der Wand (14) vorgesehene Formation ist.

2. Ködervorrichtung nach Anspruch 1, **dadurch gekennzeichnet, dass** das Teil (38 oder 38a) innerhalb der Wand (14) gleiten kann.

3. Ködervorrichtung nach Anspruch 1 oder Anspruch 2, **dadurch gekennzeichnet, dass** das Teil (38 oder 38a) in die und aus der Position durch Einsetzen bzw. Entnehmen des Teils (38 und 38a) in das bzw. aus dem Gehäuse bewegt werden kann.

4. Ködervorrichtung nach einem vorhergehenden Anspruch, **dadurch gekennzeichnet, dass** alle Öffnungen verschlossen sind, wenn sich das Teil (38 oder 38a) in der Position befindet, und alle Öffnungen geöffnet sind, wenn das Teil 38 oder 38a) entfernt ist.

5. Ködervorrichtung nach Anspruch 4, **dadurch gekennzeichnet, dass** mehrere verschiedene solche Teile (38 oder 38a) vorhanden sind, wovon jedes in eine solche und aus einer solchen Position bewegt werden kann, wobei die Unterschiede dieser Teile (38 oder 38a) derart sind, dass die Anzahl verschlossener Öffnungen (16) davon abhängt, welches ausgewählte Teil (38 oder 38a) in jene Position bewegt worden ist.

6. Ködervorrichtung nach einem der Ansprüche 1 bis 3, **dadurch gekennzeichnet, dass** das Teil (38 oder 38a) innerhalb des Gehäuses zwischen verschiedenen Positionen darin verschoben werden kann.

7. Ködervorrichtung nach Anspruch 6, **dadurch gekennzeichnet, dass** das Teil (38 oder 38a) in den verschiedenen Positionen eine jeweils unterschiedliche Anzahl von Öffnungen (16) verschließt.

8. Ködervorrichtung nach einem vorhergehenden Anspruch, **dadurch gekennzeichnet, dass** die Wand (14) und das Teil (38 oder 38a) zylindrisch sind.

9. Ködervorrichtung nach einem vorhergehenden Anspruch, **dadurch gekennzeichnet, dass** die Wand (14) und das Teil (38 oder 38a') relativ zueinander in einer Richtung längs der zylindrischen Achse beweglich sind.

10. Ködervorrichtung nach einem vorhergehenden Anspruch, **dadurch gekennzeichnet, dass** das Teil (38 oder 38a) in Bezug auf seine Länge teleskopartig einstellbar ist, indem es zwei Teile mit jeweiligen miteinander in Eingriff befindlichen Grobschraubgewinden besitzt.

11. Ködervorrichtung nach einem vorhergehenden Anspruch, **dadurch gekennzeichnet, dass** in der Wand (14) wenigstens zwei Öffnungen (16) ausgebildet sind, die in Richtung der Achse voneinander beabstandet sind.

12. Ködervorrichtung nach einem vorhergehenden Anspruch, **dadurch gekennzeichnet, dass** die oder jede Öffnung (16) eine stromlinienförmige ovale Tränenform hat.

13. Ködervorrichtung nach Anspruch 12, **dadurch gekennzeichnet, dass** der oder jeder Vorsprung (40) eine stromlinienförmige, ovale Tränenform hat.

14. Ködervorrichtung nach einem vorhergehenden Anspruch, **dadurch gekennzeichnet, dass** sie ein vorgesehenes vorderes Ende besitzt, das mit einem stromlinienförmigen Nasenabschnitt (26) versehen ist.

15. Ködervorrichtung nach Anspruch 14, **dadurch gekennzeichnet, dass** der Nasenabschnitt (26) im Allgemeinen halbkugelförmig ist.

16. Ködervorrichtung nach einem vorhergehenden Anspruch, **dadurch gekennzeichnet, dass** sie ein vorgesehenes vorderes Ende besitzt, das mit einem Nasenabschnitt (26) versehen ist, der hohl ist.

17. Ködervorrichtung nach einem vorhergehenden Anspruch, **dadurch gekennzeichnet, dass** sie ein vorgesehenes vorderes Ende besitzt, das mit einem Nasenabschnitt (26) versehen ist, der so konstruiert ist, dass er an der Wand (14) einfach befestigbar und von ihr lösbar ist.

18. Ködervorrichtung nach Anspruch 17, **dadurch gekennzeichnet, dass** der Nasenabschnitt (26) und die Wand (14) miteinander in Eingriff befindliche Schraubgewinde haben.

19. Ködervorrichtung nach Anspruch 18, **dadurch gekennzeichnet, dass** ein Satz austauschbarer Nasen mit jeweils unterschiedlichen Farben vorgesehen ist.

## Revendications

1. Un système d'appât (10) pour utilisation pour la pêche, comprenant une enceinte définie par une paroi (14) , dans laquelle sont formées une pluralité d'ouvertures (16) pour faire passer un appât de l'enceinte à l'eau, une fois en utilisation, et une partie (38 ou 38a), susceptible d'être mise en prise avec l'intérieur de la paroi (14) et pouvant être déplacée par rapport à la paroi (14), pour rejoindre et quitter une position dans laquelle la totalité ou un certain nombre de ladite pluralité d'ouvertures (16) est fermée par cette partie (38 ou 38a), de manière à sélectivement fermer ou ouvrir ces ouvertures (16), dans lequel la paroi (14) et ladite partie (38 ou 38a) sont munies de formations (16, 40) en prise mutuelle, de manière que, une fois que ladite partie (38 ou 38a) est placée en position par rapport à la paroi (14) , les deux parties (14 et 38 ou 38a) soient empêchées de se déplacer plus encore l'une par rapport à l'autre, et dans lequel lesdites formations en prise mutuelle comprennent au moins une saillie (40), se projetant vers l'extérieur, située sur ladite partie (38 ou 38a), **caractérisé en ce que** ladite au moins une saillie (40), se projetant vers l'extérieur, est de la même taille que chacune de ladite pluralité d'ouvertures et se monte dans une éventuelle ouverture sélectionnée parmi ladite pluralité d'ouvertures (16) ménagées dans la paroi (14), de manière que l'ouverture (16) elle-même soit la formation prévue dans la paroi (14).

2. Un système d'appât selon la revendication 1, **caractérisé en ce que** ladite partie (38 ou 38a) est susceptible de coulisser à l'intérieur de ladite paroi (14).

3. Un système d'appât selon la revendication 1 ou la revendication 2, **caractérisé en ce que** ladite partie (38 ou 38a) peut être déplacée pour rejoindre et quitter ladite positions, par insertion et extraction, respectivement, de ladite partie (38 ou 38a) , dans et hors de ladite ouverture.

4. Un système d'appât selon l'une quelconque des revendications précédentes, **caractérisé en ce que** la totalité desdites ouvertures sont fermées lorsque ladite partie (38 ou 38a) se trouve à ladite position, et la totalité desdites ouvertures sont ouvertes, lorsque ladite partie (38 ou 38a) est enlevée.

5. Un système d'appât selon la revendication 14, **caractérisé en ce qu'**il y a une pluralité de telles parties (38 ou 38a) différentes, dont chacune peut être déplacée, pour rejoindre ou quitter une telle position, les différences, au niveau de ces parties (38 ou 38a), étant telles que le nombre d'ouvertures (16) fermées dépend de la partie (38 ou 38a) sélectionnée, ayant été déplacée pour rejoindre cette position.

6. Un système d'appât selon l'une quelconque des revendications 1 à 3, **caractérisé en ce que** ladite partie (38 ou 38a) peut être coulissée à l'intérieur de l'enceinte, entre des positions différences à l'intérieur de celle-ci.

7. Un système d'appât selon la revendication 6, **caractérisé en ce que** ladite partie (38 ou 38a) ferme un nombre différent, respectif, d'ouvertures (16) dans lesdites positions différentes.

8. Un système d'appât selon l'une quelconque des revendications précédentes, **caractérisé en ce que** ladite paroi (14) et ladite partie (38 ou 38a) sont cylindriques.

9. Un système d'appât selon l'une quelconque des revendications précédentes, **caractérisé en ce que** ladite paroi (14) et ladite partie (38 ou 38a) sont déplaçables l'une par rapport à l'autre, dans une direction située le long de l'axe de cylindre.

10. Un système d'appât selon l'une quelconque des revendications précédentes, **caractérisé en ce que** ladite partie (38 ou 38a) est ajustable, de façon télescopique, en longueur, par le fait d'avoir deux parties munies de filets de vis grossiers respectifs, venant en prise entre eux.

11. Un système d'appât selon l'une quelconque des revendications précédentes, **caractérisé en ce que** ladite paroi (14) comprend au moins deux ouvertures (16) formées en elle, espacées dans la direction dudit axe.

12. Un système d'appât selon l'une quelconque des revendications précédentes, **caractérisé en ce que** la, ou chaque, ouverture (16) est d'une forme ovale en larme, à profil hydrodynamique.

13. Un système d'appât selon la revendication 12, **caractérisé en ce** la, ou chaque, protubérance (40) est d'une forme ovale en larme, à profil hydrodynamique.

14. Un système d'appât selon l'une quelconque des revendications précédentes, **caractérisé en ce qu'**il comprend une extrémité présumée avant, munie d'une partie de nez (26) à profil hydrodynamique.

15. Un système d'appât selon la revendication 14, **caractérisé en ce que** la partie de nez (26) est globalement hémisphérique.

16. Un système d'appât selon l'une quelconque des revendications précédentes, **caractérisé en ce qu'**il comprend une extrémité présumée avant, munie d'une partie de nez (26) creuse.

17. Un système d'appât selon l'une quelconque des revendications précédentes, **caractérisé en ce que** qu'il comprend une extrémité présumée avant, munie d'une partie de nez (26) , construite de manière qu'elle puisse aisément être attachée à, et détachée de ladite paroi (14).

18. Un système d'appât selon la revendication 17, **caractérisé en ce que** la partie de nez (26) et la paroi (14) sont munies de filets de vis, venant en prise entre eux.

19. Un système d'appât selon la revendication 18, **caractérisé en ce qu'**un jeu de nez interchangeables, de couleurs respectives différentes, sont prévus.
